# EUROPEAN PATENT APPLICATION

(11) **EP 4 832 411 A1**
(43) Date of publication of application: **28.10.2026**
(21) Application number: 25172325.0
(22) Date of filing: 24.04.2025
(51) Int. Cl.: H04L 9/08, H04L 9/32, H04L 9/06

(54) **METHOD, COMPUTER PROGRAM, APPARATUS, USER EQUIPMENT, NETWORK NODE**

(71) Applicant: Deutsche Telekom AG, 53113 Bonn (DE)
(72) Inventor: GEITZ, Marc, 58089 Hagen (DE); DÖRING, Ronny, 16775 Sonnenberg (DE); SCHNIEDERS, Dominik, 52078 Aachen (DE)
(74) Representative: 2SPL Patentanwälte PartG mbB

(57) **Abstract**

Provided is a method for data encryption. The method includes receiving, from a quantum random number generator, a random number. The method further includes generating a secure computing environment based on the random number. The method further includes storing the random number in a hardware security primitive.

## Description

### Field

The present disclosure relates to a method for data encryption, a computer program, an apparatus for data encryption, user equipment, and a network node.

### Background

Current secure network communication may rely on asymmetric or public key cryptography. For example, RSA or ECC may be used since they are secure when conventional computers are used.

However, quantum computers are considered to decrypt such asymmetrically encrypted communications in finite-time, thereby posing a threat to such communications. Accordingly, attackers may be currently executing "Store Now, Decrypt Later" (SNDL) attacks, where they intercept, and store encrypted data communications with the aim of decrypting them in the future using quantum computing and then selling the decrypted data for profit. This attack may present a serious threat for businesses and organizations.

There may be a demand for quantum secure communication.

### Summary

This demand may be satisfied by the subject-matter of the independent claims. Further aspects may be set forth in the dependent claims, the drawings, and the following description.

According to a first aspect, the disclosure provides a method for data encryption. The method includes receiving, from a quantum random number generator (QRNG) a random number. The method further includes generating a secure computing environment based on the random number. The method further includes storing the random number in a hardware security primitive.

Thereby, quantum secure computing may be provided.

In some examples, the method further includes establishing at least one connection for communication with at least one communication partner. In such examples, the method may further includes establishing encrypted communication with the at least one communication partner based on at least one further random number generated by the QRNG.

Thereby, quantum secure encrypted communication may be provided.

In some examples, the method further includes establishing the encrypted communication by encapsulating the at least one further random number based on a public key and signing the at least further one random number based on a private key.

Thereby, security may be further enhanced.

In some examples, the public key for encapsulating is part of a first asymmetric key pair generated based on a first cryptography algorithm, and the private key for signing is part of a second asymmetric key pair generated based on a second cryptography algorithm. In such examples, the first and the second cryptography algorithms are different types of algorithms. In such examples, at least one of the first and the second cryptography algorithms is based on a post quantum cryptography algorithm.

Thereby, diversification of cryptography algorithm may be achieved and security may be further enhanced.

In some examples, the at least one connection is at least one first connection, and the at least one further random number is at least one first further random number. In such examples, the method further includes establishing at least one second connection for communication with the at least one communication partner. In such examples, the method further includes transmitting the at least one first further random number via the at least one first connection. In such examples, the method further includes transmitting at least one second further random number via the at least one second connection for establishing the encrypted communication. In such examples, the method further includes deriving, based on the at least one first random number and the at least one second random number, a symmetric encryption key for the encrypted communication.

Thereby, diversification of communication paths may be achieved and security may be further enhanced.

In some examples, the method further includes establishing the at least one first connection and the at least one second connection in parallel.

Thereby, security may be further enhanced.

In some examples, the method further includes establishing the encrypted communication further based on encapsulating the at least one second random number based on a public key of a third asymmetric key pair that is generated based on the first cryptography algorithm. In such examples, the method further includes establishing the encrypted communication further based on signing the at least one random number based on a private key of a fourth asymmetric key pair that is generated based on the second cryptography algorithm.

Thereby, security may be further enhanced.

In some examples, the method further includes receiving data indicative of an encapsulated symmetric encryption key for encrypted communication. In such examples, the method further includes deriving the symmetric encryption key from the data. In such examples, the method further includes storing the derived symmetric encryption key in the hardware security primitive.

Thereby, security may be further enhanced.

In some examples, the method further includes generating the secure computing environment based on memory encryption using the random number as encryption key.

Thereby, security may be further enhanced.

In some examples, for storing the random number in the hardware security primitive, the method further includes encapsulating the random number based on a public key of an asymmetric encapsulation key pair including the public key and a private key. In such examples, the method further includes decapsulating the random number based on the private key.

Thereby, a zero-trust chain may be provided.

In some examples, for receiving the random number, the method further includes transferring from the QRNG, the random number based on a post quantum cryptography algorithm. Thereby, a QRNG may be provided that supports post quantum cryptography.

According to a second aspect, the disclosure provides a computer program including instructions which when the program is carried out on a computer, causes the computer to carry out the method of the first aspect or of any example relating to the first aspect.

Thereby, similar effects as described above may be achieved.

According to a third aspect, the disclosure provides a non-transitory computer-readable medium including instructions which, when carried out on a computer or processing circuitry, cause the computer or processing circuitry to carry out the method of the first aspect or of any example relating to the first aspect.

Thereby, similar effects as described above may be achieved.

According to a fourth aspect, the disclosure provides an apparatus for data encryption. The apparatus includes processing circuitry configured to carry out the method of the first aspect or of any example relating to the first aspect.

Thereby, similar effects as described above may be achieved.

According to a fifth aspect, the disclosure provides a user equipment (UE) including apparatus according to the fourth aspect, and wireless communication circuitry for establishing encrypted communication with at least one communication partner.

Thereby, similar effects as described above may be achieved.

In some examples, the wireless communication circuitry is based on an embedded subscriber identity module (eSIM) configured to establish at least two radio connections with the at least one communication partner.

Thereby, similar effects as described above may be achieved.

According to a sixth aspect, the disclosure provides a network node including an apparatus according to the fourth aspect, and communication circuitry for establishing bidirectional data communication between at least two communication partners.

### Brief description of the Figures

Some examples of apparatuses and/or methods will be described in the following by way of example only, and with reference to the accompanying figures, in which
Fig. 1 depicts a flowchart of a method for data encryption according to the present disclosure;
Fig. 2 depicts a block diagram of an apparatus for data encryption according to the present disclosure;
Fig. 3 depicts a block diagram of a user equipment according to the present disclosure;
Fig. 4 depicts a block diagram of a network node according to the present disclosure; and
Fig. 5 depicts a block diagram of a QRNG-PUF-(e)SIM-Application module according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

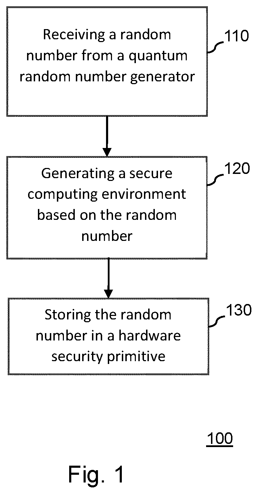

Fig. 1 depicts a flowchart of a method 100 for data encryption. Data encryption may refer to the process of converting plain, readable information into an unreadable format, called ciphertext, using a predefined algorithm and an encryption key. Such a transformation may ensure that only authorized parties with the correct decryption key can access the original information. Encryption may be used to protect sensitive data during storage or transmission, such as in emails, banking transactions, secure websites, or the like. There may be two main types of encryption: symmetric encryption, where the same key is used for both encryption and decryption, and asymmetric encryption, which may use a pair of public and private keys.

The method 100 includes receiving, 110, from a quantum random number generator (QRNG), a random number.

A QRNG may relate to a device or algorithm that uses quantum phenomena (e.g., superposition, entanglement, quantum vacuum fluctuations, or the like) to produce true randomness. Unlike classical random number generators that may rely on algorithms and can be predicted if the seed is known, QRNGs exploit the inherent unpredictability of quantum mechanics. For example, a QRNG may measure a quantum state of a photon, such as its polarization, where the outcome is fundamentally random. These measurements may then be translated into binary values (0s and 1s), thereby forming random bits. In the context of cryptography, the quality of randomness directly affects security strength and a QRNG may produce a high quality of randomness (e.g., high entropy of the outcoming random numbers).

For example, the QRNG may be based on the measurement of shot noise, without limiting the present disclosure in that regard. This may be possible since, according to quantum electrodynamics, even a vacuum may not be truly empty since it may contain fluctuating electromagnetic fields. Due to the Heisenberg uncertainty principle where, for example, a position and a momentum (or energy and a time) may only be determined together with an uncertainty, a truly empty space would violate that uncertainty principle. Quantum vacuum fluctuations may be unpredictable and irreducible, thereby making them a rich source of true randomness.

On the other hand, quantum shot noise may be measured. In such an example, a light source (e.g., an LED or laser diode) and a photodiode or CMOS (complementary metal oxide semiconductor) image sensor may be used. For example, the emitted light from the light source may be (extremely) weak or scattered so that the quantum shot noise (random variation in the number of photons detected over time) may dominate over classical noise (e.g., thermic noise or noise caused by a computing system). The photodiode (or image sensor) may measure the number of photons hitting it in discrete time intervals. Since each photon's detection may correspond to a quantum event, the resulting signal may vary randomly, governed by a Poisson distribution. The analog signal from the photodiode (or image sensor), representing photon counts or light intensity, may be digitized by an analog-to-digital converter (ADC). However, the raw data may contain some classical (predictable) noise or bias. To ensure pure randomness, a randomness extractor (such as a cryptographic hash function or a von Neumann corrector) may be used to distill only the truly unpredictable quantum bits. Such a device (including light source, photodiode, ADC, and digital post-processing logic) may be integrated into a low-power CMOS-compatible chip. For example,

Another approach may be based on single photons passing through a beam splitter and measuring where the respective photons are routed by the beamsplitter. One path through the beamsplitter may correspond to a binary zero and the other path may correspond to a binary one, thereby resulting in a binary random number.

In some examples, an encrypted version of the random number is received (and not the random number in plaintext). For example, a key encryption mechanism/method (as discussed herein, such as a post quantum cryptography key encapsulation mechanism) may be used to receive the random number from the QRNG. For example, a hardware security primitive (as discussed below) may be used as an intermediary to store the random number, from which it can be read out and used for an application. Thereby, the hardware security primitive may serve as a single point of truth.

The method 100 further includes generating, 120, a secure computing environment based on the random number.

A secure computing environment may refer to a computing context configured to ensure confidentiality, integrity, and authenticity of code and data processed within it. An example of a secure computing environment may be a trusted execution environment (TEE) which may be implemented as a hardware-isolated subsystem, for example. The secure computing environment may operate independently of a main operating system and may be protected against interference from potentially compromised software.

The secure computing environment may be configured to provide a trusted space for executing sensitive operations, such as cryptographic processing, secure key storage, and the like. The establishment of the secure computing environment may begin with a secure boot or initialization process. During this process, components of the secure computing environment may be verified for authenticity using digital signatures, hash-based measurements, or the like. Once integrity is confirmed, the secure computing environment may be instantiated and isolated from the rest of the system. In an example, the instantiation process may include allocation of a protected memory region and activation of access controls at the hardware level.

The random number (from the QRNG) may constitute a cryptographic key or be used as a seed for generating cryptographic keys within the secure computing environment, e.g., based on a key derivation function. Such keys may include session keys, storage encryption keys, communication encryption keys, identity tokens, or the like. In this context, a seed may refer to an initial value used to initialize a cryptographic algorithm within the secure computing environment. Deriving the keys from the (quantum) random number may ensure that the resulting cryptographic outputs are unpredictable and unique since high-entropy keys may be generated. Thereby, cryptographic material (data, keys, and the like) derived from the random number may be secure against brute-force and predictive attacks. The secure computing environment may use one or more keys derived from the random number to encrypt its memory contents, thereby preventing unauthorized access to data even if physical attacks on memory hardware are attempted. In addition, the random number may be used as a seed to initialize at least one secure communication channel between the secure environment and other devices or services.

A key derivation function (KDF) may relate to a cryptographic algorithm used to generate one or more cryptographic keys from a source (or seed) of initial secret material. Its purpose may include expanding or transforming the input into keys that are suitable for encryption, authentication, or other cryptographic operations. A KDF may ensure that even if the input has limited entropy or predictable structure, the derived keys may be uniformly distributed and cryptographically strong. It may further include additional inputs, such as a salt (non-secret (random) value added to input data), a contextual label, or the like, to ensure uniqueness and domain separation. A KDF may be designed to be deterministic, meaning the same input may always lead to the same output, while maintaining enough security to resist brute-force or key-recovery attacks. Some KDFs may support variable output lengths to produce multiple keys or longer keys as needed. Examples for such KDFs may include PBKDF2, HKDF (HMAC-based KDF), and scrypt.

The KDF may be post quantum secure, i.e., be able to produce keys that are strong against quantum computing attacks. This may be achieved based on one-way functions that are resistant against Grover's algorithm, for example. Examples of post-quantum-capable KDFs may include those based on hash-based cryptography (such as SHA-3. BLAKE2s with HKDF, or the like), FIPS 203's TupleHash and ParallelHash, KMAC (Keccak-based MAC and KDF), or the like. Some post-quantum key exchange protocols, like CRYSTALS-Kyber or FrodoKEM may include a built-in KDF components to derive session keys from lattice-based shared secrets. Post-quantum KDFs may focus on resisting both classical and quantum attacks while maintaining efficiency and interoperability with quantum-safe cryptographic schemes.

The random number may also be used to verify freshness and uniqueness of the secure computing environment's initialization. For example, it may form part of a nonce or one-time password mechanism, thereby ensuring that, if the system is restarted or cloned, previous session keys cannot be reused or inferred. The random number may further be used to randomize internal structures, such as address space layout, further mitigating potential exploits.

The method 100 further includes storing, 130, the random number in a hardware security primitive.

This may refer to the process of securely embedding the random number within a specialized hardware component designed to protect sensitive data, such as the random number or any encryption key derived based on the random number. Thereby, the random number may be retained in a tamper-resistant manner and may be reliably accessed (only) by authorized components of the system. One example of a hardware security primitive may be a Physical Unclonable Function (PUF). A PUF may exploit unique, inherent physical variations in microelectronic structures of a given device to produce device-specific unique responses to input challenges. In other words, a PUF may relate to a hardware-based security mechanism that exploits inherent and uncontrollable manufacturing variations in integrated circuits to produce unique and repeatable responses to specific challenges. Each PUF instance may be effectively unique, even among identically designed chips, due to microscopic or nanoscopic differences in materials, transistor behavior, circuit delay paths, or the like. Such physical variations might not be programmable, and it might not be possible to (intentionally) reproduce them, thereby making the function unclonable. A PUF may be used to generate or store cryptographic keys without requiring conventional memory. Since the key or identifier may be derived from the physical structure of the device, it might not be necessary to store it explicitly and it may disappear when power is removed. This may make the PUF resistant to tampering, probing, and duplication.

For storing the random number in the hardware security primitive, in case of a PUF, the random number may be bound to the PUF so that it may only be retrieved or reconstructed in the presence of the correct physical characteristics of the device implementing the PUF. There may be different ways of binding the random number to the PUF, such as using key wrapping, a hash-based commitment scheme, or the like, which will be briefly discussed in the following.

In key wrapping, the random number may be encrypted or "wrapped" using a key derived from the PUF. Based on the PUF response, a symmetric encryption key may be derived (e.g., using a key derivation function) for encrypting the random number and the ciphertext may be stored. Thereby, only the same device may be able regenerate the PUF-derived key and decrypt the stored ciphertext to recover the random number. This binding may ensure that the encrypted random number cannot be decrypted on any other device, even if the ciphertext is exposed.

In a hash-based commitment scheme, a cryptographic hash may be computed based on the PUF response and the random number (which may then be discarded). During verification or reconstruction, the device may regenerate the PUF response and combine it with a candidate random number to verify the hash. This may allow authentication of the correct pair (PUF response, random number) without exposing the respective values themselves.

In general terms, by binding the random number to the PUF, the random number may be made inseparable from the hardware, thus increasing its protection against cloning or extraction. Storing the random number in this way may help protect against physical attacks, side-channel attacks, reverse engineering, and the like. The random number may be used later for re-initializing secure environments, re-generating cryptographic keys, authenticating the hardware device, or the like.

Furthermore, the hardware security primitive may ensure that access to the stored random number is policy-controlled and hardware-isolated from untrusted software, thus making it suitable for mobile devices and embedded systems where software-based key protection alone might be considered insufficient. In some examples, the random number may serve as a seed to reconstruct secret keys dynamically from the PUF, without the need to store the key itself. This dynamic reconstruction may add another layer of security, as no static key may be present in memory. Overall, storing the random number in a hardware security primitive like a PUF may combine the unpredictability of quantum-generated randomness with the unforgeability of the variations of physical hardware, thereby enabling robust device-level security.

In some examples, the method 100 further includes establishing a radio connection for communication with at least one communication partner.

A connection for communication may be based on any type of connection, such as wired (e.g., landline, cable, DSL, or the like) or wireless (e.g., a radio connection). A radio connection may refer to a wireless communication link established between two or more devices using radio frequency (RF) signals. It may enable transmission and reception of data without the need for physical cables. A radio connection may be used in technologies such as Wi-Fi (or WLAN), Bluetooth, cellular networks, satellite communications, or the like.

A communication partner may refer to any entity that participates in the exchange of data over the connection (e.g., radio connection or wireless link, without limiting the present disclosure in that regard). This entity may be a user device (e.g., a smartphone, laptop, loT (internet of things) sensor, or the like), a service (such as a cloud-based application, authentication server, or the like), any network element (including routers, access points, base stations, or the like), or the like. The communication partner may engage in transmitting and/or receiving data, either initiating the communication or responding to a request. It may also perform tasks such as processing, routing, storing, or securing the transmitted information. Regardless of its type, the communication partner may be identified by a network address or identifier. "At least one" may refer to a number of communication partners. Any number may be in accordance with the present disclosure. If more than one communication partners are present, these partners may be based on the same entity (e.g., more than one user device/equipment) or on different entities (e.g., one user equipment and one service).

The method 100 may further includes establishing encrypted communication with the at least one communication partner based on at least one further random number generated by the QRNG.

This may relate to an initiation of a secure data exchange session between a device (or apparatus) and the at least one communication partner. Encryption may be employed to protect the communication. The encryption process may be based on the same or a different (i.e., additional) random number (as the at least one further random number) generated by the QRNG. If the further random number is distinct from the previously generated random number (used for generating the secure computing environment and stored with the hardware security primitive, as described above), it may be ensured that the communication session is cryptographically independent from earlier operations.

The at least one further random number may be used directly as key for the encrypted communication or for deriving at least one key, e.g., based on at least one key derivation function (e.g., as described above).

The establishment of encrypted communication may include mutual authentication, agreement on encryption algorithms, secure session initialization, and the like. This process may ensure that only authorized parties can read or modify the transmitted data. By relying on fresh quantum entropy for each communication session, the system may achieve forward secrecy and may minimize the risk of replay, impersonation attacks, store-now-decrypt-later attacks, or the like.

In some examples, the method 100 further includes establishing the encrypted communication by encapsulating the at least one further random number based on a public key and signing the at least further one random number based on a private key.

Encapsulation may refer to the process of securely transmitting the at least one further random number by encrypting it using the at least one communication partner's public key. This may ensure that only the at least one communication partner, who holds the corresponding private key, can decrypt and retrieve the at least one further random number. The result of such an encapsulation may be a ciphertext, which can be transmitted over an insecure channel.

The at least one communication partner may then use their private key to decapsulate the ciphertext and recover the original secret (the at least one further random number). Thereby, a hybrid encryption scheme may be applied, where the encapsulated at least one further random number may be used as a symmetric key to encrypt the actual message payload (or as a seed to derive further keys). Encapsulation may ensure that the secret is not exposed in the clear, even during transmission. It may also provide forward secrecy when fresh randomness is used for each session.

There may be different Key Encapsulation Mechanisms (KEMs), such as classical or post-quantum KEMs. For example, a post-quantum KEM may be based on a lattice problem (e.g., CRYSTALS-Kyber), thereby providing a quantum-resistant mathematical structure. Encapsulation may be used in environments where communication partners do not have pre-shared symmetric keys, enabling secure key agreement over public channels.

In general, public key cryptography (also referred to as asymmetric cryptography) may be used for encapsulating the at least one further random number. In such an approach, a public key and a private key may be used as mathematically linked values. The public key is intended to be shared openly and used by others to encrypt messages or verify digital signatures. The private key, in contrast, should be kept secret by its owner and may be used to decrypt messages encrypted with the public key or to sign data for authentication purposes. Such keys may be generated as a pair, using cryptographic algorithms (classic such as RSA, ECC - or post-quantum alternatives like lattice-based or code-based schemes). This mathematical relationship may ensure that data encrypted with the public key can only be decrypted with the corresponding private key, and vice versa. This may enable confidential communication even when messages are sent over unsecured channels. For example, when the at least one further random number is encapsulated using a public key, only the holder of the corresponding private key can retrieve it.

Similarly, when data is signed using a private key, anyone with the public key can verify the signature but cannot forge it. Signing may refer to the process of generating a digital signature using a private key, applied to a specific piece of data. The digital signature may serve as a form of cryptographic proof that the data originated from the holder of the private key and has not been tampered with. Anyone with access to the corresponding public key may be able to verify the signature to confirm the authenticity and integrity of the signed data. In the context of the present disclosure, signing the at least one further random number may ensure that the at least one communication partner can verify that it was generated and sent by a legitimate party.

If public key cryptography is used for encapsulating the at least one further random number, and the (encapsulated) at least one further random number is also signed based on a public key cryptography algorithm, these two algorithms may be the same or may be different algorithms. In more detail, the public key for encapsulating may be part of a first asymmetric key pair generated based on a first cryptography algorithm, and the private key for signing may be part of a second asymmetric key pair generated based on a second cryptography algorithm.

The first and the second cryptography algorithms may be the same type of algorithms or different types of algorithms according to which the asymmetric key pair is generated. A type of cryptographic algorithm may refer to a class or family of cryptographic methods/algorithms used to perform cryptographic operations such as encryption, decryption, key generation, digital signing, or the like. In the context of asymmetric cryptography, each type may define the mathematical structure and hardness assumptions on which the security of the algorithm is based. For example, RSA may be a type of cryptographic algorithm that relies on the computational difficulty of factoring large integers, whereas lattice-based cryptography may be a type that relies on the hardness of problems such as the Learning With Errors (LWE) or Shortest Vector Problem (SVP) in high-dimensional lattices. Different types of cryptographic algorithms may be suited to different security needs and threat models. In this method, a first type of cryptographic algorithm may be used to generate an asymmetric key pair for encapsulation, providing secure key transport or agreement. Independently, a second type of cryptographic algorithm may be used to generate another asymmetric key pair for signing, enabling authentication and integrity verification. These two types may be based on different mathematical foundations to achieve cryptographic diversification, thereby enhancing security.

In some examples, at least one of the first and the second cryptography algorithms is based on a post quantum cryptography algorithm, i.e., one may be based on a classic cryptography algorithm and one may be based on a post quantum cryptography algorithm, or both may be based on a post quantum algorithm.

As mentioned above, using different types of cryptography algorithms for deriving different keys may cause cryptographic diversification, thereby increasing security. It has been recognized that other types of diversification may be used as well to enhance security, such as diversification of communication channels/paths, diversification by location, diversification by time, diversification by uplink/downlink, or the like.

For example, two (or more) (radio) connections may be established and through each of the established (radio) connections, at least one random number may be transmitted that may form a basis of the key. In other words, a first (radio) connection may be established and a first further random number may be transmitted through that first (radio) connection. Moreover, a second (radio) connection may be established and a second further random number may be transmitted through that second (radio) connection, and so on. For example, different communication providers/operators may be used for establishing the two (or more) (radio) connections, if they are to be established in parallel, i.e., based on two distinct channels. On the other hand, if they are to be established after each other (but with on the same operator), different network addresses may be used for transmitting the first and the second further random numbers.

In general terms, the diversification should lead to the (at least) two random numbers (or (at least) two keys) being transmitted in a disjoint way, such that it may be hard to impossible to correlate them and such that it may be impossible to derive an encryption key based on intercepting only a subset of the disjoint ways.

For example, the disjoint ways may be different (mobile) networks, such that different network providers may be used, as mentioned above. For example, eSIM (electronic subscriber identity module) may be used to switch between the different network or to establish two connections in parallel (based on different profiles). For example, a first service provider may be the user's primary provider offering internet connectivity and data volume, while a second service provider may provide specific services (e.g., only the transmission of the at least one further random number), e.g., based on tailored low-data plan, cost-effective subscription/prepaid models, and low-cost alternative communication paths.

On the other hand, a second network may be a (private or public) Wi-Fi (WLAN) or Ethernet access point, a satellite channel, or the like.

An eSIM may relate to a programmable, embedded chip integrated directly into a device (e.g., a UE) that performs the same or a similar function as a traditional physical SIM card. It may securely store the user's mobile subscriber information and may allow the device to connect to at least one cellular network. Unlike removable SIM cards, an eSIM may be remotely provisioned, enabling users to switch carriers or activate new service profiles without changing hardware. eSIMs may be used in smartphones, tablets, wearables, loT devices, or the like, e.g., providing greater flexibility and space efficiency. They may also enhance security by being soldered into the device, making them less susceptible to physical tampering or theft.

As mentioned above, diversification by location may be adopted additionally or alternatively. For example, even when different networks are used at the same location, they may be locally intercepted. Accordingly, different locations may be used for transmitting the further random numbers. Thereby, the further random numbers required to generate a new secret (e.g., the symmetric encryption key) may be distributed across various locations and risk of interception by a (single) local eavesdropping setup may be reduced.

Additionally or alternatively, diversification by time may be adopted. For example, transmission of the further random numbers needed for the secret may be distributed over a predetermined timespan (e.g., several hours or days). The at least one communication partner may only assemble these numbers into the new secret once all the required random numbers have been successfully transmitted.

Additionally or alternatively, diversification by uplink/downlink may be adopted. Downlink may refer to a communication direction from a network entity (e.g., server, base station or the like) to the UE, and uplink may refer to the opposite direction. The further random numbers may be distributed using only uplink-based, downlink-based, or mixed methods, depending on the type of communication network. For example, in uplink, the UE may transmit a signal to the base station, e.g., using beamforming. Side lobes generated during this process may be intercepted by an attacker in the vicinity of the UE. In downlink, the network entity may transmit a signal to the end device using beamforming. Side lobes also occur, which an attacker can intercept near the base station. For intercepting, the attacker must be near to the network entity. Switching between uplink and downlink transmission may reduce the risk of attack, as it may force the attacker to reposition and adapt to varying interception points. By leveraging communication directions, the system may add another layer of complexity for potential attackers.

It should be noted that a number of further random numbers or a number of (PQC) key exchange paths required may depend on a number of disjoint communication paths. By maximizing the number of disjoint communication paths, security may be enhanced accordingly.

To maintain practicality, the disjoint communication paths may be chosen with an emphasis on efficiency and cost-effectiveness. This may ensure that the diversification strategy is both secure and financially viable. By balancing a high level of path diversification with cost efficiency, the present disclosure may provide a scalable and practical solution to secure the exchange of random numbers. Redundancy and resilience may be applied by adding a Shamir Secret Coding of the random numbers prior to transmission - either of the random numbers or the PQC key exchange mechanism.

Since an attacker can intercept a communication at various points between sender and receiver, diversification of communication channels may lead to a more secure communication.

Potential attack points may include the end device, a communication link between the end device and an access point (e.g., RAN, WiFi AP, satellite, or the like), a communication link within the network of the provider (e.g., RAN/Fixed access, transport network, core network, IP backbone, peering point, or the like), the internet, a server, or the like. If the random number is transmitted via separate communication channel that the attacker cannot access at that moment, they may be unable to generate the resulting secret (based on all random numbers). Consequently, the attacker might not be able to decrypt the communication.

If disjoint communication paths are used and thus, more than one further random number is to be transmitted, similar principles may be applied to the transmitted random numbers. As discussed above, different cryptography algorithms may be used for encapsulation and for signing the transmitted further random number. This principle may be applied to each further random number.

Additionally or alternatively to generating the random number, the method 100 may include receiving data indicative of an encapsulated symmetric encryption key for encrypted communication. The data indicative of the encapsulated symmetric encryption key may be data indicative of a number used as a seed or used as a key directly. The method 100 may further include deriving the symmetric encryption key from the data (e.g., by decapsulating and optionally by applying at least one KDF). The method 100 may further include storing the derived symmetric encryption key, e.g., in the hardware security primitive.

In some examples, for storing the random number in the hardware security primitive, the method 100 further includes encapsulating the random number based on a public key of an asymmetric encapsulation key pair including the public key and a private key. For example, if the method is implemented in a (single) device (or UE), different circuitries or apparatuses may be used for different functions. For example, the UE may include a dedicated PUF (or hardware security primitive), a dedicated application (running on a TEE), and a dedicated QRNG, for example. For communicating the random number or any further random number between these entities, principles of asymmetric cryptography, as discussed herein may be applied. In such examples, the method 100 may further include decapsulating the random number based on the private key. It should be noted that this example may refer to the transferring of the random number to the hardware security primitive based on encapsulation. When the hardware security primitive has received the random number, it may store the random number in a different way, such as based on its signature (when it is a PUF) as symmetric key, or in a similar way (if it is configured for asymmetric encryption).

In some examples, for receiving the random number, the method 100 further includes transferring from the QRNG, the random number based on a post quantum cryptography algorithm. For example, the QRNG (or circuitry coupled to the QRNG) may be configured to use a KEM (as discussed herein) to transfer the random number, e.g. to the application running on the TEE, that receives the random number accordingly.

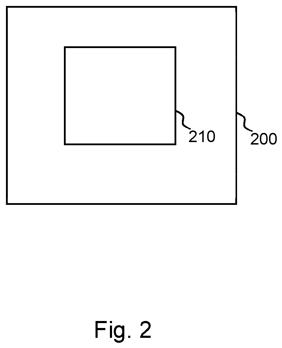

Fig. 2 depicts an apparatus 200 for data encryption. The apparatus 200 includes processing circuitry 210 configured to carry out any one of the methods discussed herein.

Processing circuitry 210 may relate to any entity or multitude of entities that is configurable or configured to carry out any one of the methods discussed herein. For example the processing circuitry 210 may be implemented using one or more processing units, one or more circuitries, any means for processing, such as one or more processors, one or more computers, one or more programmable hardware components being operable with accordingly adapted software. In other words, the described function of the processing circuitry 210 may as well be implemented in software, which may then be executed on one or more programmable hardware components. Such hardware components may comprise a general-purpose processor, a Digital Signal Processor (DSP), a micro-controller, a computer, a processor, a control unit, a (field) programmable logic array ((F)PLA), a (field) programmable gate array ((F)PGA), a graphics processing unit (GPU), a central processing unit (CPU), a neural processing unit (NPU), an application-specific integrated circuit (ASIC), an integrated circuit (IC), a system-on-a-chip (SoC) system, or the like.

It should be noted that the functionalities that the processing circuitry 210 is configured to implement may be directly implemented within the processing circuitry 210 or the processing circuitry 210 may be configured to (e.g., based on interface circuitry) communicate with respective functions, such as a QRNG and a hardware security primitive. For example, the QRNG may be at least a part of the processing circuitry 210 or it may be a separate entity. The same may apply to the hardware security primitive, which may be implemented in vicinity of the processing circuitry 210 (e.g., on the same device), or which may be implemented in at least one remote entity (such as a remote server).

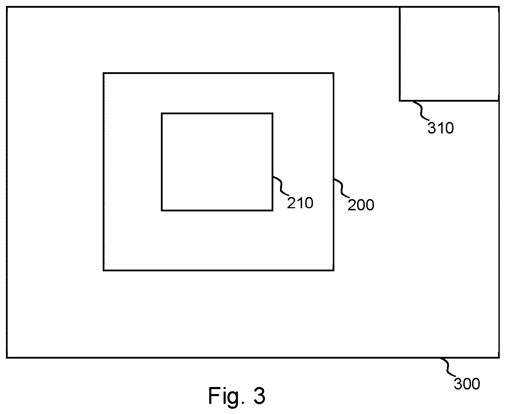

Fig. 3 depicts a user equipment (UE) 300 including the apparatus 200 and wireless communication circuitry 310 for establishing encrypted communication with at least one communication partner. The UE 300 may include any device to be operated by an end user to access a communication network (e.g., a wired or wireless network). It may include a smartphone, a tablet, a laptop, an IoT device, or the like, configured to connect to communication networks, such as mobile networks (e.g., 4G, 5G, 6G, Wi-Fi, or the like). In mobile networks, the UE 300 may be responsible for tasks such as signal processing, authentication, and session management. The UE 300 may correspond to the term used in standards defined by organizations like 3GPP to describe the client-side of a wireless communication link, but the present disclosure is not limited in that regard since a communication according to the present disclosure may also be based on (fully) wired networks.

The wireless communication circuitry 310 may include both hardware and software components needed for communication, such as a radio transceiver, modem, antenna, and a protocol stack. It may establish a radio connection with an access point (e.g., base station, Wi-Fi access point, or the like) to send and receive data.

In some examples, the wireless communication circuitry is based on an embedded subscriber identity module (eSIM) configured to establish at least two radio connections with the at least one communication partner.

When using an eSIM, multiple connections may be established in parallel or timing of the multiple connections may be controlled accordingly, e.g., based on different profiles of the eSIM, such that the at least one first random number and the at least one second random number can be transmitted over distinct communication channels, and such that the diversification of the communication channels described herein may be achieved. For example, if a UE includes more than one modem, more than one connection can be established at the same time, and if only on modem is included two connections may be established consecutively. It should be noted that both examples may be encompassed by the terminology "in parallel".

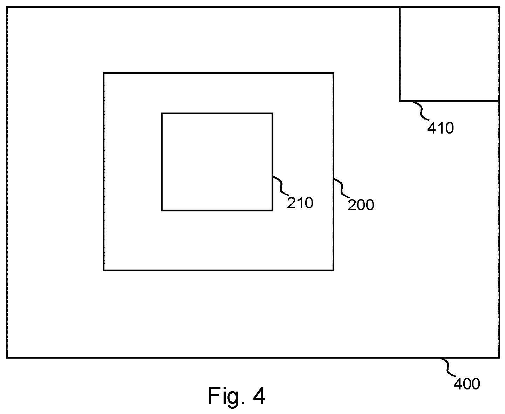

Fig. 4 depicts a network node 400 including the apparatus 200. The network node 400 may refer to any infrastructure component that participates in the transmission, reception, routing, or processing of data within one or multiple communication networks and that may be capable of establishing or maintaining an encrypted communication link with user equipment and/or other devices. The network node 400 may include, but is not limited to, cellular base stations (e.g., eNodeB, gNodeB), WLAN (Wi-Fi) routers/switches, LAN routers/switches, access points, edge computing gateways, any type of connector-based network, access point based network, or the like. The network node 400 may facilitate communication across different network layers and domains, including local area networks (LANs), wide area networks (WANs), mobile access networks, or the like.

In the context of the encrypted communication described herein, the network node 400 may serve as the at least one communication partner or may establish the communication with the at least one communication partner. The network node 400 may support functions such as key negotiation, certificate validation, secure tunneling, protocol-specific encryption (e.g., TLS, IPsec, WPA3), or the like. It may also enforce security policies or participate in the setup of a secure computing environment by handling initialization vectors, nonces, quantum-derived session keys, or the like.

The network node 400 further includes communication circuitry 410 for establishing bidirectional data communication between at least two communication partners. In this context, the network node 400 may serve as an intermediate to establish the communication (including the transmission of random number, etc.), but the present disclosure is not limited in that regard. The communication circuitry 410 may refer to hardware and associated components configured to enable wireless or wired data exchange between devices, including the establishment of encrypted communication links. The communication circuitry 410 may include one or more radio transceivers, modems, antennas, signal processing units, or the like, that support communication protocols such as Wi-Fi, LTE, 5G, Bluetooth, or the like, including wired communication protocols, such as Ethernet. The communication circuitry 410 may be responsible for transmitting and receiving data packets, performing modulation and demodulation, managing channel access, or the like. It may further support cryptographic operations, such as the exchange of encryption keys, the execution of secure handshake protocols, or the like. In some examples, the communication circuitry may interface with a QRNG, as described herein. It should be noted that more than one network node 400 may be present, and at least one apparatus 200 may communicate with more than one network node 400 (or more than one other apparatuses 200). It should further be noted that the apparatus 200 is not necessarily bound to the network node 400 as it may be an own device or may be provided in a different entity.

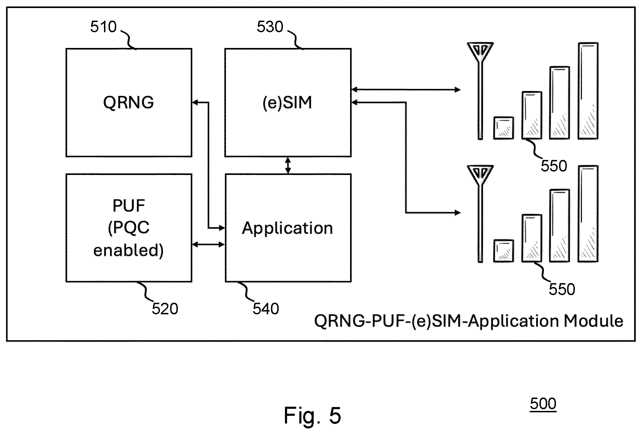

Fig. 5 depicts an example of a QRNG-PUF-(e)SIM-application module 500 according to the present disclosure that may be provided as an apparatus described herein. The module 500 includes a QRNG 510, as described herein, a PUF 520 (that is enabled for PQC), as described herein, an (e)SIM 530, as described herein, an application 540 that runs in a secure computing environment, as described herein, and at least one modulator 550.

Additionally or alternatively to what is described above, the PUF 520 may relate to a (hardware) component that carries a secret key, which may be used to encrypt cryptographical artifacts, like private keys, pre-shared secrets, VPN credentials, or the like. The PUF secret key cannot be exploited by attackers. An attempt to exploit the key would destroy the PUF 520 and hence the module 500. In the context of the module 500, the PUF 520 may expose secret keys, which have been persisted on the device, via a PQC-encrypted channel, to the application 540.

The application may be hosted in encrypted memory, as described herein. The application 540 may be implemented as a dedicated application module, may be an endpoint for the data connection from/to the PUF 520, and may receive random numbers from the QRNG 510. The data processed by the application module may be sent to the (e)SIM module, to be sent via at least one mobile network to another communication endpoint/partner.

The sending of the data may be carried out by at least one modulator 550 (two are depicted in this example, but the present disclosure is not limited in that regard). The modulators 550 may be configured to drive antennas that enable the connection of a UE (that includes the module 500) to a mobile network, for example (but as described above, other type of networks may be used, such as access-point based, connector-based, or the like). With multiple modulators, the UE may be configured to maintain multiple mobile network connections at the same time.

In the following, an exemplary method (with an exemplary ordering of method steps) is described that may be carried out based on the module 500, but which may also be applied in combination with the more general concepts described above under reference of Figs. 1 to 4.

The PUF 520 and the eSIM 530 may register with a certificate authority (CA) and receive a signed certificate, containing public KEM keys and public Signature (SIG) keys. This way, a PQC-encrypted communication may be enabled. Corresponding private keys may be stored in the PUF 520.

On power-on, the application 540 may start a secure computing environment. During the power-on process, new KEM & SIG private keys and a Certificate Signing Request (CSR) may be created. The CSR may be sent to the CA (encrypted with the public CA KEM key and signed with the private application module SIG key), where it may be signed. The returned certificate may be stored in the PQC CA trust-chain of the application 540. The private keys may be stored in the PUF 520 (encrypted by the public PUF KEM key and signed by the private application module SIG key).

A random number may be requested from the QRNG 510. The request may be encrypted with the public KEM key of the Application 540 (which may be available through the application's 540 certificate, as discussed above) and signed with the QRNG's 510 private SIG key.

The random number may be used to create an encrypted environment to conduct computations, e.g., the generation of encryption keys. The encrypted RAM (random access memory) of the application 540 may be secured by symmetric encryption (e.g., AES-256, where the random number of 256 Bit length may serve as encryption key).

The random number (which may serve as the AES-256 encryption key) may be stored in the PUF 520. To do so, the key may be encrypted using the PUF's public KEM key and the message may be signed using the application module's private SIG key. The PUF 520 can decrypt the message using its private KEM key and it can check the sender's authenticity using the public SIG key (as part of the sender's certificate).

Thereby, an application module with an AES-256 encrypted RAM may be provided to conduct computations, i.e. a quantum secure computing environment may be provided.

In case the QRNG 510 and/or the eSIM 530 are not cryptographically preconfigured, they may deploy a similar procedure as described above.

In the following, a further exemplary method (with an exemplary ordering of method steps) for key exchange is described that may be carried out based on the module 500, but which may also be applied in combination with the more general concepts described above under reference of Figs. 1 to 4.

For this method, the use of private/public KEM/SIG keys may be disregarded, because all system components may be properly configured and may use PQC to secure the communication links.
1. A random number may be requested from the QRNG 510 by the application 540.
2. The application 540 may conduct a PQC KEM protocol to exchange the random number with a peer or communication partner.

In the following, a further exemplary method (with an exemplary ordering of method steps) for key exchange is described that may be carried out based on the module 500, but which may also be applied in combination with the more general concepts described above under reference of Figs. 1 to 4.
1. A random number may be requested from the QRNG 510 by the application 540.
2. The random number may be encrypted with the public KEM key of the communication partner and signed with the application's 540 private SIG key.
3. The encrypted and signed message may be delivered to the communication partner.
4. The communication partner may receive the message.
5. The communication partner may check the sender's authenticity using the sender's public SIG key (which may be available via the certificate) and may decrypt the message using the private KEM key. As a result, both parties may share the same secret and they may now utilize a shared session key.

In the following, a further exemplary method (with an exemplary ordering of method steps) for multi-provider key distribution is described that may be carried out based on the module 500, but which may also be applied in combination with the more general concepts described above under reference of Figs. 1 to 4. In this method, the eSIM 530 may have at least two different network access profiles.
1. Two (or more) random numbers may be requested from the QRNG 510 by the application 540.
2. The random numbers may be encrypted with different public KEM keys of the communication partner and signed with different application's private SIG keys. The keys may be based on different PQC algorithms, e.g., Kyber or Frodo (or the like) for KEM, Falcon or Dilithium (or the like) for SIG.
3. Each encrypted and signed message may then be transmitted using a different eSIM access profile across distinct networks. If the UE is equipped with two modulators 550 and antennas, as depicted in Fig. 5, both network connections may operate simultaneously (in parallel). However, if the device has only one modulator 550 and antenna, the network connections may be run sequentially.
4. The communication may require the same network connectivity as the sender.

In the following, a further exemplary method (with an exemplary ordering of method steps) for key reception and storage in the PUF 520 is described that may be carried out based on the module 500, but which may also be applied in combination with the more general concepts described above under reference of Figs. 1 to 4.
1. The application 540 may receive one or more random numbers from a communication partner via one or more connections.
2. The application 540 may check the authenticity of the sender and may decrypt the (one or more) random numbers.
3. A final encryption key may be derived based on a KDF using the one or more received random numbers. For example, if more than one or more than two random numbers are received, a KDF may be applied multiple times, or a dedicated KDF may be used that is configured for the specific amount of random numbers.
4. The final encryption key may be obtained based on the public key of the PUF 520 and signed with the private SIG key of the application 540 and thereafter sent to the PUF 520.
5. The PUF 520 may receive the message, check authentication of the application 540 and decrypts the message. The random number may then be stored in the PUF 520 after encrypting it using the PUF key. The PUF key encryption may be symmetric, hence quantum secure.

According to the present disclosure, a miniaturized design may be provided for a provider-side key exchange infrastructure. This may ensure compatibility and easy integration into a provider's key exchange platform. The present disclosure may be implemented in Silicon (e.g., as an integrated chip that has all the functionalities described herein), integrating a miniaturized QRNG, PUF and (e)SIM hardware together with a programmable application. The design may support multiple networks at the same time. Due to its miniature, it may be integrated into mobile phones, telemetric units, IoT sensors, or the like. By using a PUF as secure storage for cryptographic artifacts, the present disclosure may enable a zero-trust architecture. In this setup, the PUF may act as a single point of trust, storing all keys used. The present disclosure may enhance the security level of a single PQC encryption by implementing multiple PQC encryptions in parallel, effectively addressing quantum threats through a cost-effective solution, suitable for mobile communications. The present disclosure may provide means to counter "Store Now Decrypt Later attacks" facilitated by (future) quantum computers. It may achieve this by utilizing a diversification of disjoint communication paths across channels, locations, and time, while ensuring efficiency.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for data encryption, the method (100) comprising:
receiving (110), from a quantum random number generator, QRNG (510), a random number;
generating (120) a secure computing environment based on the random number; and
storing (130) the random number in a hardware security primitive (520).

2. The method (100) of claim 1, further comprising:
establishing at least one connection for communication with at least one communication partner; and
establishing encrypted communication with the at least one communication partner based on at least one further random number generated by the QRNG (510).

3. The method (100) of claim 2, further comprising establishing the encrypted communication by encapsulating the at least one further random number based on a public key and signing the at least one further random number based on a private key.

4. The method (100) of claim 3, wherein the public key for encapsulating is part of a first asymmetric key pair generated based on a first cryptography algorithm,
wherein the private key for signing is part of a second asymmetric key pair generated based on a second cryptography algorithm,
wherein the first and the second cryptography algorithms are different types of algorithms,
and wherein at least one of the first and the second cryptography algorithms is based on a post quantum cryptography algorithm.

5. The method (100) of any one of claims 2 to 4, wherein the at least one connection is at least one first connection, and wherein the at least one further random number is at least one first further random number, the method (100) further comprising:
establishing at least one second connection for communication with the at least one communication partner;
transmitting the at least one first further random number via the at least one first connection;
transmitting at least one second further random number via the at least one second connection for establishing the encrypted communication; and
deriving, based on the at least one first random number and the at least one second random number, a symmetric encryption key for the encrypted communication.

6. The method (100) of claim 5, further comprising establishing the at least one first connection and the at least one second connection in parallel.

7. The method (100) of claim 5 or 6, further comprising establishing the encrypted communication further based on:
encapsulating the at least one second random number based on a public key of a third asymmetric key pair that is generated based on the first cryptography algorithm; and
signing the at least one random number based on a private key of a fourth asymmetric key pair that is generated based on the second cryptography algorithm.

8. The method (100) of any one of claims 2 to 7, further comprising:
receiving data indicative of an encapsulated symmetric encryption key for encrypted communication; and
deriving the symmetric encryption key from the data; and
storing the derived symmetric encryption key in the hardware security primitive (520).

9. The method (100) of any one of claims 1 to 8, further comprising generating the secure computing environment based on memory encryption using the random number as encryption key.

10. The method (100) of any one of claims 1 to 9, wherein, for storing the random number in the hardware security primitive (520), the method (100) further comprises:
encapsulating the random number based on a public key of an asymmetric encapsulation key pair including the public key and a private key; and
decapsulating the random number based on the private key.

11. The method (100) of any one of claims 1 to 10, wherein, for receiving the random number, the method (100) further comprises:
transferring, from the QRNG (510), the random number based on a post quantum cryptography algorithm.

12. An apparatus (200) for data encryption comprising processing circuitry (210) configured to carry out the method (100) of any one of claims 1 to 11.

13. A user equipment (300), UE, comprising:
an apparatus (200) according to claim 12; and
wireless communication circuitry (310) for establishing encrypted communication with at least one communication partner.

14. The UE (300) of claim 13, wherein the wireless communication circuitry is based on an embedded subscriber identity module (530), eSIM, configured to establish at least two radio connections with the at least one communication partner.

15. A network node (400) comprising:
an apparatus (200) according to claim 12; and
communication circuitry (410) for establishing bidirectional data communication between at least two communication partners.

## Amended claims

### Amended claims in accordance with Rule 137(2) EPC.

1. A method (100) for data encryption, the method (100) comprising:
receiving (110), from a quantum random number generator, QRNG (510), a random number;
generating (120) a secure computing environment based on memory encryption using the random number as encryption key; and
storing (130) the random number in a hardware security primitive (520).

2. The method (100) of claim 1, further comprising:
establishing at least one connection for communication with at least one communication partner; and
establishing encrypted communication with the at least one communication partner based on at least one further random number generated by the QRNG (510).

3. The method (100) of claim 2, further comprising establishing the encrypted communication by encapsulating the at least one further random number based on a public key and signing the at least one further random number based on a private key.

4. The method (100) of claim 3, wherein the public key for encapsulating is part of a first asymmetric key pair generated based on a first cryptography algorithm,
wherein the private key for signing is part of a second asymmetric key pair generated based on a second cryptography algorithm,
wherein the first and the second cryptography algorithms are different types of algorithms,
and wherein at least one of the first and the second cryptography algorithms is based on a post quantum cryptography algorithm.

5. The method (100) of any one of claims 2 to 4, wherein the at least one connection is at least one first connection, and wherein the at least one further random number is at least one first further random number, the method (100) further comprising:
establishing at least one second connection for communication with the at least one communication partner;
transmitting the at least one first further random number via the at least one first connection;
transmitting at least one second further random number via the at least one second connection for establishing the encrypted communication; and
deriving, based on the at least one first random number and the at least one second random number, a symmetric encryption key for the encrypted communication.

6. The method (100) of claim 5, further comprising establishing the at least one first connection and the at least one second connection in parallel.

7. The method (100) of claim 5 or 6, further comprising establishing the encrypted communication further based on:
encapsulating the at least one second random number based on a public key of a third asymmetric key pair that is generated based on the first cryptography algorithm; and
signing the at least one random number based on a private key of a fourth asymmetric key pair that is generated based on the second cryptography algorithm.

8. The method (100) of any one of claims 2 to 7, further comprising:
receiving data indicative of an encapsulated symmetric encryption key for encrypted communication; and
deriving the symmetric encryption key from the data; and
storing the derived symmetric encryption key in the hardware security primitive (520).

9. The method (100) of any one of claims 1 to 8, wherein, for storing the random number in the hardware security primitive (520), the method (100) further comprises:
encapsulating the random number based on a public key of an asymmetric encapsulation key pair including the public key and a private key; and
decapsulating the random number based on the private key.

10. The method (100) of any one of claims 1 to 9, wherein, for receiving the random number, the method (100) further comprises:
transferring, from the QRNG (510), the random number based on a post quantum cryptography algorithm.

11. A computer program comprising instructions which, when the program is carried out on a computer, causes the computer to carry out the method (100) of any one of claims 1 to 10.

12. An apparatus (200) for data encryption comprising processing circuitry (210) configured to carry out the method (100) of any one of claims 1 to 10.

13. A user equipment (300), UE, comprising:
an apparatus (200) according to claim 12; and
wireless communication circuitry (310) for establishing encrypted communication with at least one communication partner.

14. The UE (300) of claim 13, wherein the wireless communication circuitry is based on an embedded subscriber identity module (530), eSIM, configured to establish at least two radio connections with the at least one communication partner.

15. A network node (400) comprising:
an apparatus (200) according to claim 12; and
communication circuitry (410) for establishing bidirectional data communication between at least two communication partners.
